# EUROPÄISCHE PATENTSCHRIFT

(11) **EP 0 447 500 B1**
(45) Veröffentlichungstag und Bekanntmachung des Hinweises auf die Patenterteilung: **24.08.1994**
(21) Anmeldenummer: 90909699.2
(22) Anmeldetag: 30.06.1990
(51) Int. Cl.: F16D 55/227, F16D 65/16

(54) **TEILBELAG-SCHEIBENBREMSE**
PART-LINED DISC BRAKE
FREIN A DISQUE A GARNITURE PARTIELLE

(30) Priorität: 06.10.1989 DE 3933395
(43) Veröffentlichungstag der Anmeldung: 25.09.1991
(73) Patentinhaber: ITT Automotive Europe GmbH, 60488 Frankfurt (DE)
(72) Erfinder: WEILER, Rolf, D-6239 Eppstein 2 (DE)
(86) Internationale Anmeldenummer: EP9001050
(87) Internationale Veröffentlichungsnummer: WO9105176

(56) Entgegenhaltungen:
- EP-A- 0 294 286
- EP-A- 0 341 392
- EP-A- 0 341 610
- DE-A- 2 549 865
- DE-A- 2 701 451
- DE-A- 3 338 109
- DE-A- 3 508 039
- DE-C- 2 804 808
- FR-A- 1 089 618
- GB-A- 988 701
- US-A- 4 159 754

## Beschreibung

Die Erfindung betrifft eine Teilbelag-Scheibenbremse, insbesondere für Kraftfahrzeuge gemäß dem Oberbegriff des Anspruchs 1.

Eine gattungsgemäße Teilbelag-Scheibenbremse ist aus der DE-AS 28 04 808 bekannt, die zwei in Sekantenrichtung zur Bremsscheibe in Abstand voneinander angeordnete Bremsträgerarme und daran geführte Bremsbacken aufweist. Ein äußerer Schenkel des Bremsgehäuses, der die indirekt betätigte Bremsbacke gegen die Bremsscheibe drückt, ist mit einer runden Öffnung versehen. Der äußere Schenkel ist somit in Sekantenrichtung zweigeteilt mit zwei zu einer Symmetrieachse symmetrisch angeordneten Faustfingern. Bei Bremsbetätigung werden die einzelnen Finger des Bremsgehäuses trotz einer Materialanhäufung aufgeweitet, so daß ein tangentialer Schrägverschleiß der äußeren Bremsbacke möglich ist.

Eine weitere gattungsgemäße Teilbelag-Scheibenbremse ist auch aus der DE-A-27 01 451 bekannt. Bei dieser Scheibenbremse ist der äußere Schenkel des Bremsgehäuses zwar geschlossen ausgeführt, bedeckt aber nur einen relativ kleinen Teilbereich der äußeren Bremsbacke und kann daher einen gleichmäßigen Andruck der Bremsbacke an die Bremsscheibe nicht gewährleisten.

Der Erfindung liegt die Aufgabe zugrunde, einen äußeren Schenkel eines Bremsgehäuses zu verbessern. Insbesondere soll ein tangentialer Schrägverschleiß der äußeren Bremsbacke vermieden und ein axialer Einbauraum für den äußeren Schenkel eines Bremsgehäuses verringert werden.

Diese Aufgabe wird gemäß den kennzeichnenden Merkmalen des Anspruchs 1 gelöst. Der äußere Schenkel des faustartigen Bremsgehäuses ist geschlossen ausgeführt, so daß die für ein Werkzeug vorgesehene Aussparung zwischen den aus dem Stand der Technik bekannten Faustfingern des äußeren Schenkels mit Guß aufgefüllt ist. Damit kann einerseits die radiale Länge des äußeren Schenkels herabgesetzt und die axiale Ausdehnung des äußeren Schenkels insgesamt verringert werden. Des weiteren wird vorteilhaft eine Geräuschminderung beim Betätigen der Bremse erzielt. Damit sind die beiden Finger des äußeren Schenkels in integrierter Bauweise miteinander verbunden. Die untere Kante des äußeren Schenkels erstreckt sich in einem gleichbleibenden radialen Abstand zu der scheibenförmigen Umfangskontur der Bremsscheibe. Damit wird eine vorteilhaft gleichmäßige Druckverteilung auf die Bremsbacke über den Umfang der Bremsbacke erzielt und es ergibt sich eine vorteilhaft gleichmäßige Gußverteilung für den äußeren Schenkel. In Umfangsrichtung verlaufende Rippen an der äußeren Seite des äußeren Schenkels dienen vorteilhaft zur Abführung von Reibungswärme.

Ein in Sekantenrichtung ragender Aushebezahn untergreift einen der Bremsträgerarme, so daß vorteilhaft ein Ausheben des Bremsgehäuses in Radialrichtung nach außen verhindert ist.

Die Bremsbacken sind radial außerhalb des Bremsscheibenumfanges an den Tragteilen abgestützt, so daß vorteilhaft der Bremsträger einteilig mit dem Achssschenkel als integrierter Achsschenkel ausgeführt ist. Dabei wird eine einfache Bandmontage erzielt, weil nach Einbau der Bremsscheibe die Bremsbacken auf den integrierten Achsschenkeln aufhängbar sind und danach das Bremsgehäuse von oben über die Bremsscheibe und die Bremsbacken aufsetzbar und an den Achsschenkel anschraubbar ist.

In vorteilhafter Weise greifen radial nach außen gerichtete Ansätze der Bremsträgerarme in dafür vorgesehene Nuten der Bremsbackenenden ein, so daß zumindest bei höheren Bremsanlegekräften die an der Bremsbacke auftretende Reibungskraft vorteilhaft auf beide Bremsträgerarme übertragbar sind, so daß die Kraft auf zwei Arme verteilt ist.

Vorteilhaft ist das Bremsgehäuse im Bereich seines Brückenabschnittes an tangentialen Bremsbackenenden der äußeren Bremsbacke in Sekantenrichtung abgestützt, so daß das Bremsgehäuse einerseits nicht in Umfangsrichtung auswandern kann und andererseits die Bremsbacke in Umfangsrichtung durch den dazwischenliegenden Brückenabschnitt verstärkt ist.

In vorteilhafter Weise sind für die Scheibenbremse kolben- wie felgenseitig gleiche Bremsbacken vorgesehen, so daß innere und äußere Bremsbacke problemlos austauschbar sind und die Bremsbacken beim Einbau neuer Bremsbacken nicht verwechselt werden können.

In einer einfachen Ausgestaltung der Erfindung ist eine Zentralfeder in einen Schacht des Bremsgehäuses gehalten und verspannt die Bremsbacken zwischen den Trägerarmen und dem Bremsgehäuse, so daß die Bremsbacken klapperfrei gehalten sind.

In einer anderen einfachen Ausgestaltung der Erfindung ist die innere Bremsbacke von einem in den Kolben ragenden Dreifingerclip an dem Kolben und damit an dem Bremsgehäuse gehalten, so daß die innere Bremsbacke gemeinsam mit dem Bremsgehäuse über die Bremsscheibe aufsetzbar und an den Achsschenkel montierbar ist.

In einer vorteilhaften Ausgestaltung der Erfindung sind elastische Dämpfungshülsen (Bushings) in Führungsbohrungen des Bremsgehäuses eingesetzt, die das Bremsgehäuse elastisch nachgiebig an in dem Bremsträger befestigten Führungsbolzen abstützen. Damit wird eine trockene Bushing-Führung erzielt, wobei das Bushing aus gleitfähigem EPDM-Material (Ethylen-Propylen-Dien Rubber) hergestellt ist, also ein gleitfähiges Gummi vorgesehen ist.

In vorteilhafter Weise erstrecken sich über den Brückenabschnitt des Bremsgehäuses Längsrippen in Axialrichtung, so daß eine Aufweitung des Bremsgehäuses bei Bremsbetätigung zumindest teilweise verhindert ist, weil die Längsrippen des Brückenabschnittes das Gußbremsgehäuse an dieser Stelle verstärken.

In einer ersten einfachen Ausgestaltung der Erfindung ist das Bremsgehäuse zweiteilig ausgeführt und in einer radialen gegenüber der Bremsscheibe zu der Betätigungseinrichtung hin versetzten Ebenen in einen inneren und einen äußeren Teil des Bremsgehäuses geschnitten. Damit wird erreicht, daß das Betätigungsgehäuse unabhängig von dem äußeren Schenkel bearbeitet werden kann, so daß die Zylinderbohrung für den Kolben ohne größeren Werkzeugaufwand in das Betätigungsgehäuse gebohrt werden kann. Dabei können verschiedene Werkstoffe für beide Teile Verwendung finden, also z.B. Aluminium und Sphäroguß (GGG, Kugelgraphitguß) oder Grauguß (GG) und Sphäroguß, um vorteilhaft Gewicht einzusparen.

In vorteilhafter Weise ist der Flanschabschnitt axial mittig auf das Bremsgehäuse aufgesetzt, so daß vorteilhaft der innere und äußere Teil mit Schrauben miteinander verschraubbar sind, wobei die Schraubenköpfe zur Fahrzeugmitte hin ragen und das Gewinde in einem verstärkten äußeren Teil des Bremsgehäuses hineinragt, der aufgrund der sich radial erweiternden Felge an dieser Stelle erzielbar ist.

In einer weiteren einfachen Ausgestaltung der Erfindung ist das Bremsgehäuse einteilig ausgeführt und von einem Deckel und einem zwischen dem Deckel und dem Bremsgehäuse angeordneten Dichtring druckdicht verschlossen, so daß die Zylinderbohrung mit einfachen Werkzeugen von der dem äußeren Schenkel abgewandten Seite des Bremsgehäuses bohrbar ist. Vorteilhaft ist der kreisförmige Deckel so einsetzbar, daß der Schlauchanschluß des Deckels über 360° verstellbar ist so daß für verschiedene Fahrzeugtypen, die anzuschließenden Schläuche von verschiedenen Orten heranführbar sind. Vorteilhaft können auch verschiedene Deckel mit im Azimutwinkel verschiedenen Schlauchanschlüssen Verwendung finden. Bei der einteiligen Ausführungsform ist Material und damit Gewicht eingespart.

Der innere Schenkel weist im wesentlichen ein Betätigungsgehäuse mit einer Kolbenzylindereinheit auf, auf das ein sich radial erstreckender Flansch aufgesetzt ist. Auf dem Flansch sind Rippen aufgesetzt, die zur Verstärkung dienen und vorteilhaft einer Aufweitung des Bremsgehäuses vorbeugen, da die Rippen sich strahlenförmig vom Betätigungsgehäuse über den Flansch erstrecken.

Nachfolgend sind Ausführungsbeispiele der Erfindung anhand von Zeichnungen näher erläutert.

Es zeigen
- Fig. 1: einen Längsschnitt durch eine Teilbelag-Scheibenbremse,
- Fig. 2: die Scheibenbremse in Draufsicht,
- Fig. 3: eine teilweise geschnittene Seitenansicht der Teilbelag-Scheibenbremse,
- Fig. 4: die Rückseite der Scheibenbremse und
- Fig. 5: eine Teilbelag-Scheibenbremse mit einem Deckel.

In den Figuren sind gleiche bzw. einander entsprechende Bauteile der Übersichtlichkeit wegen mit gleichen Bezugszeichen versehen.

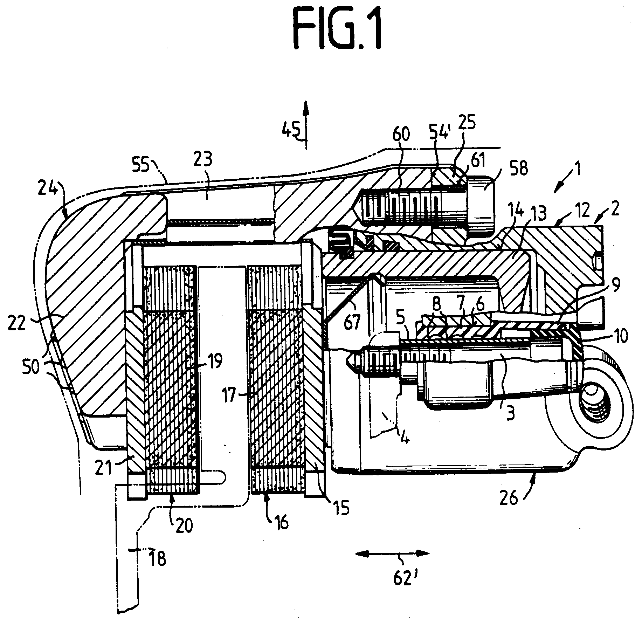

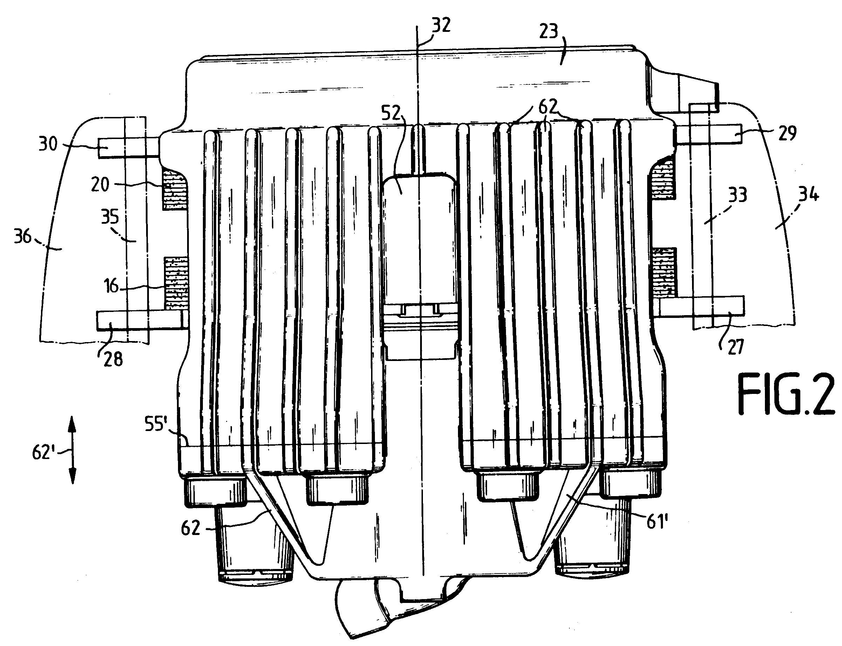

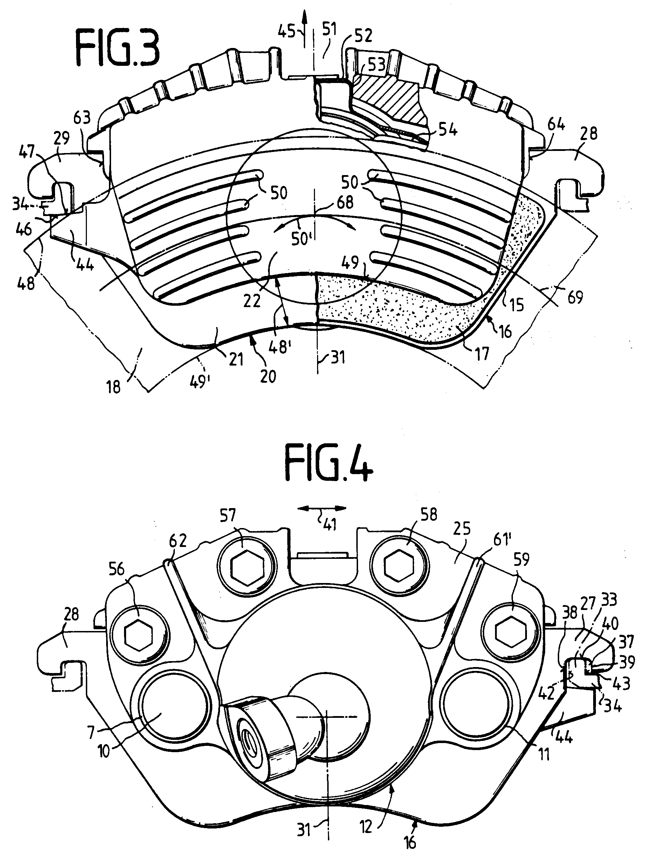

Fig. 1 bis 4 zeigen eine Teilbelag-Scheibenbremse 1 mit einem U-förmigen Bremsgehäuse 2. Ein Bolzen 3 ist in einem Bremsträger 4 verschraubt und von einer Schutzhülse 5 ummantelt, die durch den Bolzen 3 axial am Bremsträger 4 festgelegt ist. Der Bolzen 3 und die Schutzhülse 5 erstrecken sich durch eine Führungsbohrung 6 des Bremsgehäuses 2. Eine elastische Führungs- und Dämpfungshülse 7 ummantelt die Schutzhülse 5 und zentriert mit Hilfe ihrer Rippen 8 den Bolzen 3 mittig in der Führungsbohrung 6 des Bremsgehäuses 2. Ein axialer Fortsatz 9 der Dämpfungshülse 7 dient zur Aufnahme einer Schutzkappe 10. Das Bremsgehäuse 2 ist über zwei identisch aufgebaute Führungen aus dem Bolzen 3 der Schutz- hülse 5 und den Dämpfungshülsen 7,11 symmetrisch an dem Bremsträger 4 gelagert. In einem Betätigungsgehäuse 12 des Bremsgehäuses 2 ist ein Kolben 13 einer Betätigungseinrichtung in einer Zylinderbohrung 14 verschiebbar gelagert. Der Kolben 13 drückt direkt gegen eine Trägerplatte 15 einer Bremsbacke 16, die somit mit einem Reibbelag 17 gegen eine erste Seite einer Bremsscheibe 18 angelegt wird. Über die Reaktionskraft des Bremsgehäuses 2 wird ein Reibbelag 19 einer zweiten Bremsbacke 20 gegen die andere Seite der Bremsscheibe 18 gedrückt. Dabei legt sich ein äußerer Schenkel 22 gegen eine Trägerplatte 21 der Bremsbacke 20. Das Bremsgehäuse 2 besteht im wesentlichen aus dem äußeren Schenkel 22 und einem Brückenabschnitt 23, die einen äußeren Teil 24 des Bremsgehäuses 2 bilden und dem Betätigungsge- häuse 12 und einem Flansch 25, die einen inneren Teil 26 des Bremsgehäuses 2 bilden. Beide Bremsbacken 16,20 weisen tangentiale Bremsbackenenden 27,28,29 und 30 auf, die wegen der Gleichartigkeit der Bremsbacken 16, 20 identisch ausgebildet und zu einer durch die Achsen 31, 32 bestimmten Symmetrieebene symmetrisch sind. Die Bremsbackenenden 27,29 liegen auf einem radial nach außen vorspringenden Ansatz 33 eines ersten Bremsträgerarmes 34 und die Bremsbackenenden 28,30 auf einem radial vorspringenden Ansatz 35 eines zweiten Bremsträgerarmes 36 auf. Die Ansätze 33,35 erstrecken sich axial über eine solche Länge, daß die sich gegenüberliegenden Bremsbackenenden 27,29 bzw.28, 30 beider Bremsbacken 16,20 auf demselben Ansatz 33,35 aufliegen. Die Bremsbacken- enden 27,28,29,30 umgreifen die Ansätze 33,35. Der Einfach- heit halber und wegen der Gleichartigkeit wird das Umgreifen nur anhand eines Bremsbackenendes 27 näher erläutert. Das Bremsbackenende 27 weist eine radial nach innen gerichtete Nut 37 auf, die in Umfangsrichtung von Nutflächen 38,39 und radial nach oben von einer Basisfläche 40 begrenzt ist. Die Basisfläche 40 liegt auf dem radialen Ansatz 33 des Brems- trägerarmes 34 auf. Die Nutflächen 38,39 treten bei Bremsbe- tätigung mit in Sekantenrichtung 41 gerichteten Ansatz- flächen 42,43 des radialen Ansatzes 33 in Berührung, und zwar so, daß ein Pull-Push (Ziehen-Drücken)-Betrieb gewähr- leistet ist, d.h. daß die Spiele in der Nut 37 zwischen dem Ansatz 33, 35 und dem Bremsbackenende 27, 28, 29, 30 so bemessen sind, daß die Bremsbacke 16, 20 zunächst auf der Einlaufseite der Bremsscheibe 18 mit dem einen Bremsträgerarm und danach auf der Auslaufseite mit dem anderen Bremsträgerarm in Berührung tritt. Dabei wird die Bremsbacke 16, 20 zunächst gezogen und dann gedrückt, um vorteilhaft gleichmäßigen Reibbelagverschleiß zu gewährleisten. Ein Aushebezahn 44 erstreckt sich in Sekantenrichtung 41 von dem äußeren Schenkel 22 des Bremsgehäuses 2 und untergreift den Bremsträgerarm 34, so daß ein Ausheben des Bremsgehäuses 2 in radialer Richtung 45 verhindert wird. Dabei kommen einem sich in Sekantenrichtung 41 ersteckende Anlagefläche 46 des Aushebezahnes 44 und eine sich in Sekantenrichtung 41 erstreckende Anlagefläche 47 des Bremsträgerarmes 34 miteinander in Berührung. Die Bremsbackenenden 27,28,29 und 30 sind außerhalb des Bremsscheibenumfangs 48 der Bremsscheibe 18 angeordnet. Der äußere Schenkel 22 weist eine untere Kante 49 auf, die sich in einem gleichbleibenden Abstand 48' zu dem Bremsscheibenumfang 48 bzw. zu dem inneren Umfang 49' der Bremsscheibe 18 erstreckt. Auf dem Schenkel 22 sind mehrere sich in Umfangsrichtung 50' erstreckende Rippen 50 angeordnet. In einem Schacht 51 des Bremsgehäuses 2 ist eine Zentralfeder 52 angeordnet, die sich einerseits an den Schacht 51 begrenzenden Wänden 53 und andererseits auf einem radial äußeren Rand 54 der Bremsbacken 16,20 abstützt. Der innere Teil 26 und der äußere Teil 24 des Bremsgehäuses 2 sind in einer tangentialen Ebene, die durch die Achsen 54' und 55' vorgegeben ist, geteilt. Dabei ist der Flansch 25 axial mittig auf dem Betätigungsgehäuse 12 aufgesetzt, so daß sich der Brückenabschnitt 23 des äußeren Teiles 24 über dem Betätigungsgehäuse 12 in radialer Richtung 45 einer Felgenkontur 55 anpassend über dem Betätigungsgehäuse 12 aufweiten kann. Dabei ist der Brückenabschnitt 23 radial so dick bemessen, daß Schrauben 56 bis 59 mit ihrem Gewindeabschnitt 60 in dem Brückenabschnitt 23 verschraubbar sind. Die Schrauben 56 bis 59 durchgreifen eine Bohrung 61 des Flansches 25. Auf dem Flansch 25 sind strahlenförmig von dem Betätigungsgehäuse 12 ausgehend Längsrippen 61',62 vorgesehen. Auf dem Brückenabschnitt 23 erstrecken sich in Axialrichtung 62' Längsrippen 62. Stirnflächen 63,64 der Bremsbackenenden 29,30 stützen das Bremsgehäuse 2 an dessen Stirnseiten ab. Die innere Bremsbacke 16 ist von einem Dreifingerclip 67 an dem Kolben 13 gehalten. Ausgehend vom Kolbenschwerpunkt 68 erstreckt sich in Umfangsrichtung 50' eine Umfangsschwerpunktlinie 69 für die äußere Bremsbacke 20, die von dem äußeren Schenkel 22 zumindest über einen Teilumfang gleichmäßig überragt ist. Damit ergibt sich vorteilhaft eine gleichmäßige Druck- und Gußverteilung für den äußeren Schenkel 22.

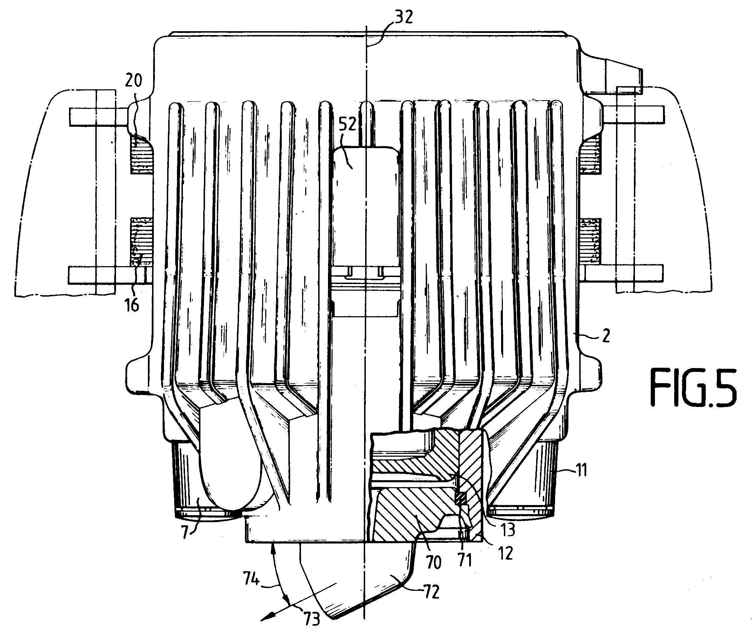

Fig. 5 zeigt ein einteiliges Bremsgehäuse 2, dessen Betätigungsgehäuse 12 auf der zur Bremsenmitte hin zeigenden Seite von einem Deckel 70 verschlossen ist. Dabei ist zwischen dem Betätigungsgehäuse 12 und dem Deckel 70 eine Dichtung 73 angeordnet, die das Betätigungsgehäuse 12 druckdicht abschließt. An dem Deckel 70 ist ein Schlauchanschluß 72 ausgebildet, der in Richtung 73 weist. Der Schlauchanschluß 72 ist während der Montage in der durch die Achsen 54',55' definierten Ebene verdrehbar. Des weiteren können verschiedene Deckel 70 mit im Azimutwinkel 74 verschiedenen Schlauchanschlüssen 72 für die Montage vorgesehen sein.

### Bezugszeichenliste

- 1: Teilbelag-Scheibenbremse
- 2: Bremsgehäuse
- 3: Bolzen
- 4: Bremsträger
- 5: Schutzhülse
- 6: Führungsbohrung
- 7: Dämpfungshülse
- 8: Rippen
- 9: Fortsatz
- 10: Schutzkappe
- 11: Dämpfungshülse
- 12: Betätigungsgehäuse
- 13: Kolben
- 14: Zylinder
- 15: Trägerplatte
- 16: Bremsbacke
- 17: Reibbelag
- 18: Bremsscheibe
- 19: Reibbelag
- 20: Bremsbacke
- 21: Trägerplatte
- 22: äußerer Schenkel
- 23: Brückenabschnitt
- 24: äußerer Teil
- 25: Flansch
- 26: innerer Teil
- 27: Bremsbackenende
- 28: Bremsbackenende
- 29: Bremsbackenende
- 30: Bremsbackenende
- 31: Achse
- 32: Achse
- 33: Ansatz
- 34: Bremsträgerarm
- 35: Ansatz
- 36: Bremsträgerarm
- 37: Nut
- 38: Nutfläche
- 39: Nutfläche
- 40: Basisfläche
- 41: Sekantenrichtung
- 42: Ansatzfläche
- 43: Ansatzfläche
- 44: Aushebezahn
- 45: radiale Richtung
- 46: Anlagefläche
- 47: Anlagefläche
- 48: Bremsscheibenumfang
- 48': Abstand
- 49: Kante
- 49': innerer Umfang
- 50: Rippen
- 50': Umfangsrichtung
- 51: Schacht
- 52: Zentralfeder
- 53: Wand
- 54: Rand
- 54': Achse
- 55: Felgenkontur
- 55': Achse
- 56: Schraube
- 57: Schraube
- 58: Schraube
- 59: Schraube
- 60: Gewindeabschnitt
- 61: Bohrung
- 61': Längsrippe
- 62: Längsrippe
- 62': Axialrichtung
- 63: Stirnfläche
- 64: Stirnfläche
- 67: Dreifingerclip
- 68: Kolbenschwerpunkt
- 69: Umfangsschwerpunktlinie
- 70: Deckel
- 71: Dichtung
- 72: Schlauchanschluß
- 73: Richtung
- 74: Azimutwinkel

## Patentansprüche

1. Teilbelag-Scheibenbremse für Kraftfahrzeuge, mit zwei in Sekantenrichtung (41) zur Bremsscheibe (18) im Abstand voneinander angeordneten Bremsträgerarmen (34,36), mit zwei radial auf den Bremsträgerarmen (34,36) aufliegenden Bremsbacken (16,20), mit einem Bremsgehäuse (2), das die Bremsbacken (16,20) und die Bremsscheibe (18) U-förmig übergreift, mit einer Kolben-Zylinder-Einheit (13,14) in einem ersten inneren Schenkel (12) des Bremsgehäues (2), mit der die erste Bremsbacke (16) direkt gegen eine erste Seite der Bremsscheibe (18) andrückbar ist und mit einem zweiten äußeren Schenkel (22), der über einen Brückenabschnitt (23) mit dem ersten Schenkel (12) verbunden ist und der die zweite äußere Bremsbacke (20) indirekt gegen die andere Seite der Bremsscheibe (18) drückt, dadurch **gekennzeichnet**, daß sich die radial innenliegende Kante (49) des geschlossen ausgeführten äußeren Schenkels (22) in einem gleichbleibenden radialen Abstand (48') zu den Umfangskanten (48,49') der Bremsscheibe (18) erstreckt und daß an dem äußeren Schenkel (22) Rippen (50) angeordnet sind, die in Umfangsrichtung (50') verlaufen.

2. Teilbelag-Scheibenbremse nach Anspruch 1, dadurch **gekennzeichnet**, daß der äußere Schenkel (22) einen in Sekantenrichtung (41) ragenden Aushebezahn (44) aufweist, der einen Bremsträgerarm (34) radial innen untergreift.

3. Teilbelag-Scheibenbremse nach Anspruch 1 oder 2, dadurch **gekennzeichnet**, daß die Bremsbacken (16,20) tangentiale Bremsbackenenden (27,28,29,30) aufweisen, die radial außerhalb des Bremsscheibenumfangs (48) an den Bremsträgerarmen (34,36) abgestützt sind.

4. Teilbelag-Scheibenbremse nach Anspruch 3, dadurch **gekennzeichnet**, daß die tangentialen Bremsbackenenden (27,28,29,30) mit radial nach innen geöffneten Nuten (37) radial nach außen gerichtete Ansätze (33,35) der Bremsträgerarme (34,36) umgreifen, die relativ zueinander so bemessen sind, daß zumindest bei höheren Bremsanlegekräften die an der Bremsbacke (16,20) auftretende Reibungskraft auf beide Bremsträgerarme (34,36) übertragbar sind.

5. Teilbelag-Scheibenbremse nach Anspruch 3 oder 4, dadurch **gekennzeichnet**, daß die tangentialen Bremsbackenenden (29,30) der äußeren Bremsbacke (20) sich im wesentlichen radial erstreckende, einander zugekehrte Stirnflächen (63,64) aufweisen, an denen sich das Bremsgehäuse (2) abstützt.

6. Teilbelag-Scheibenbremse nach einem der Ansprüche 1 bis 5, dadurch **gekennzeichnet**, daß die Bremsbacken (16,20) identisch aufgebaut sind.

7. Teilbelag-Scheibenbremse nach einem der Ansprüche 1 bis 6, dadurch **gekennzeichnet**, daß eine in einem Schacht (51) des Bremsgehäuses (2) gehaltene Zentralfeder (52) beide Bremsbacken (16,20) gegen die Bremsträgerarme (34,36) verspannt.

8. Teilbelag-Scheibenbremse nach einem der Ansprüche 1 bis 5, dadurch **gekennzeichnet**, daß die innere Bremsbacke (16) von einem in den Kolben (13) ra- genden Dreifingerclip (67) an dem Kolben (13) gehalten ist.

9. Teilbelag-Scheibenbremse nach einem der Ansprüche 1 bis 8, dadurch **gekennzeichnet**, daß elastische Dämpfungshülsen (7,11) in Führungsbohrungen (6) des Bremsgehäuses (2) angeordnet sind, die das Bremsgehäuse (2) elastisch nachgiebig an am Bremsträger (4) befestigten Führungsbolzen (3) abstützen.

10. Teilbelag-Scheibenbremse nach einem der vorhergehenden Ansprüche, dadurch **gekennzeichnet**, daß sich auf dem Brückenabschnitt (23) des Bremsgehäuses (2) Längsrippen (62) in Axialrichtung (62') erstrecken.

11. Teilbelag-Scheibenbremse nach einem der vorhergehenden Ansprüche, dadurch **gekennzeichnet**, daß das Bremsgehäuse (2) zweiteilig ausgeführt ist und in einer radialen, gegenüber der Bremsscheibe (18) zu der Betätigungseinrichtung (13,14) hin versetzten Ebene in einen inneren Teil (26) und einen äußeren Teil (24) geschnitten ist.

12. Teilbelag-Scheibenbremse nach Anspruch 11, dadurch **gekennzeichnet**, daß ein sich im wesentlichen radial nach außen erstreckender Flansch (25) axial mittig auf das Betätigungsgehäuse (12) aufgesetzt ist und daß der innere Teil (26) und der äußere Teil (24) miteinander verschraubt sind.

13. Teilbelag-Scheibenbremse nach einem der Ansprüche 1 bis 10, dadurch **gekennzeichnet**, daß die Zylinderbohrung (14) des Betätigungsgehäuses (12) von einem Deckel (70) und einem zwischen dem Deckel (70) und dem Gehäuse (2) angeordneten Dichtring (71) druckdicht verschlossen ist.

14. Teilbelag-Scheibenbremse nach einem der vorhergehenden Ansprüche, dadurch **gekennzeichnet**, daß Längsrippen (61',62) auf dem Flansch (25) bzw. auf das Bremsge- häuse (2) aufgesetzt sind, die sich strahlenförmig vom Betätigungsgehäuse (12) aus über den Flansch (25) bzw. über das Bremsgehäuse (2) erstrecken.

## Claims

1. A spot-type disc brake, in particular for automotive vehicles, with two brake carrier arms (34, 36) being positioned at a distance from each other in the direction of a secant (41) in respect of the brake disc (18), with two brake shoes (16, 20) resting radially on the brake carrier arms (34, 36), with a brake housing (2) which straddles the brake shoes (16, 20) and the brake disc (18) in a U-shaped manner, with a piston-and-cylinder unit (13, 14) being positioned within a first, internal stem (12) of the brake housing (2) and by means of which the first brake shoe (16) can be urged directly against a first side of the brake disc (18), and with a second, external stem (22) being coupled to the first stem (12) through a bridge section (23) and urging the second, external brake shoe (20) indirectly against the other side of the brake disc (18),
**characterized** in that the radially internal edge (49) of the external stem (22), which latter has a closed design, extends at a constant radial distance (48') from the circumferential edges (48, 49') of the brake disc (18), and in that ribs (50) are positioned at the external stem (22) which run in circumferential direction (50').

2. A spot-type disc brake as claimed in claim 1,
**characterized** in that the external stem (22) is furnished with a lifting-out tooth (44) projecting in secant direction (41) which makes catch radially internally beneath a brake carrier arm (34).

3. A spot-type disc brake as claimed in claim 1 or 2,
**characterized** in that the brake shoes (16, 20) are formed with tangential brake shoe ends (27, 28, 29, 30) which are supported at the brake carrier arms (34, 36) radially outside the brake disc circumference (48).

4. A spot-type disc brake as claimed in claim 3,
**characterized** in that the tangential brake shoe ends (27, 28, 29, 30) straddle, with radially inwardly opening grooves (37), radially outwardly directed projections (33, 35) of the brake carrier arms (34, 36) which are sized such relative to each other that the frictional force which occurs at the brake shoe (16, 20) is transmittable to both brake carrier arms (34, 36) at least in the presence of more elevated brake application forces.

5. A spot-type disc brake as claimed in claim 3 or 4,
**characterized** in that the tangential ends (29, 30) of the external brake shoe (20) present substantially radially extending front surfaces (63, 64) facing each other at which the brake housing (2) takes support.

6. A spot-type disc brake as claimed in anyone of the claims 1 to 5,
**characterized** in that the brake shoes (16, 20) have an identical set-up.

7. A spot-type disc brake as claimed in anyone of claims 1 to 6,
**characterized** in that a central spring (52) being retained within an aperture (51) of the brake housing (2) braces both brake shoes (16, 20) against the carrier arms (34, 36).

8. A spot-type disc brake as claimed in anyone of claims 1 to 5,
**characterized** in that the internal brake shoe (16) is retained at the piston (13) by a three-finger clip (67) which projects into the piston (13).

9. A spot-type disc brake as claimed in anyone of claims 1 to 8,
**charcterized** in that elastic damping bushings (7, 11) are positioned within guide bores (6) of the brake housing (2) which elastically and yieldingly support the brake housing (2) at guide pins (3) which are fixed to the brake carrier (4).

10. A spot-type disc brake as claimed in anyone of the preceding claims,
**characterized** in that longitudinal ribs (62) extend in axial direction (62') on the bridge section (23) of the brake housing (2).

11. A spot-type disc brake as claimed in anyone of the preceding claims,
**characterized** in that the brake housing (2) is configurated two-part and is sectioned into an internal part (26) and an external part (24) in a radial plane which is offset in respect of the brake disc (18) in the direction of the actuating device (13, 14).

12. A spot-type disc brake as claimed in claim 11,
**characterized** in that a substantially radially outwardly extending flange (25) is axially centrically disposed on the actuating housing (12), and in that the internal part (26) and the external part (24) are screwed together.

13. A spot-type disc brake as claimed in anyone of claims 1 to 10,
**characterized** in that the cylinder bore (14) of the actuating housing (12) is closed pressure-tightly by a cover lid (70) and by a sealing ring (71) which is interposed between the cover lid (70) and the housing (2).

14. A spot-type disc brake as claimed in anyone of the preceding claims,
**characterized** in that longitudinal ribs (61', 62) are positioned on the flange (25), respectively on the brake housing (2) which extend ray-shape from the actuating housing (12) accross the flange (25), respectively accross the brake housing (2).

## Revendications

1. Frein à disque à garniture partielle pour véhicules automobiles comprenant deux bras de support (34, 36) du frein disposés à une distance l'un de l'autre, dans le sens de la sécante (41) du disque de frein (18), comprenant deux plaquettes de frein (16, 20), comprenant un carter de frein (2) encadrant selon une forme de U les plaquettes de frein (16, 20) et le disque de frein (18), comprenant une unité à pistoncylindre (13, 14) agencée dans une première branche intérieure (12) du carter de frein (2), grâce à laquelle la première plaquette de frein (16) peut être forcée directement contre une première face du disque de frein (18), et comprenant une seconde branche extérieure (22) reliée, par l'intermédiaire d'une section de pontage (23), à la première branche (12) et forçant la seconde plaquette extérieure (20) du frein indirectement contre l'autre face du disque de frein (18),
caractérisé en ce que
le bord (49) radialement intérieur de la branche extérieure (22) réalisée en branche fermée s'étend le long des bords périphériques (48, 48') du disque de frein (18) à une distance radiale uniforme (48') par rapport à ceux-ci, et en ce que des nervures (50) s'étendant dans le sens de la circonférence sont agencées sur la branche extérieure (22).

2. Frein à disque à garniture partielle selon la revendication 1, caractérisé en ce que la branche extérieure (22) comporte une dent anti-décrochage (44) saillant dans le sens de la sécante (41), qui s'engage radialement à l'intérieur sous un bras de support (34) du frein.

3. Frein à disque à garniture partielle selon l'une des revendications 1 ou 2, caractérisé en ce que les plaquettes de frein (16, 20) comportent des extrémités tangentielles (27, 28, 29, 30) qui s'appuient radialement à l'extérieur de la circonférence (48) du disque de frein sur les bras de support (34, 36) du frein.

4. Frein à disque à garniture partielle selon la revendication 3, caractérisé en ce que les extrémités tangentielles (27, 28, 29, 30) des plaquettes de frein entourent, par leurs rainures (37) s'ouvrant radialement vers l'intérieur, des prolongements (33, 35) des bras de support (34, 36), dirigés radialement vers l'extérieur, ces prolongements étant dimensionnés selon une relation l'un par rapport à l'autre, qui fait qu'au moins dans le cas d'efforts élevés d'application des freins, la force de frottement créée au niveau de la plaquette de frein (16, 20) puisse être répartie sur les deux bras de support (34, 36) du frein.

5. Frein à disque à garniture partielle selon la revendication 3 ou la revendication 4, caractérisé en ce que les extrémités tangentielles (29, 30) de la plaquette de frein extérieure (20) présentent des faces frontales juxtaposées (63, 64) s'étendant essentiellement dans le sens radial, sur lesquelles s'appuie le carter de frein (2).

6. Frein à disque à garniture partielle selon l'une des revendications 1 à 5, caractérisé en ce que les plaquettes de frein (16, 20) sont conçues de façon identique.

7. Frein à disque à garniture partielle selon l'une des revendications 1 à 6, caractérisé en ce qu'un ressort central (52) maintenu dans un puits (51) du carter de frein (2) rappelle les deux plaquettes de frein (16, 20) en appui sur les bras de support (34, 36) du frein.

8. Frein à disque selon l'une des revendications 1 à 5, caractérisé en ce que la plaquette de frein intérieure (16) est maintenue contre le piston (13) par un ressort à trois branches (67) saillant à l'intérieur du piston (13).

9. Frein à disque à garniture partielle selon l'une des revendications 1 à 8, caractérisé en ce que des douilles élastiques d'amortissement (7, 11) sont disposées dans des alésages de guidage (6) du carter de frein (2), supportant le carter de frein (2) élastiquement sur des axes de guidage (3) fixés sur le support de frein (4).

10. Frein à disque à garniture partielle selon l'une des revendications précédentes, caractérisé en ce que des nervures longitudinales (62) s'étendent dans le sens axial (62') le long de la section de pontage (23) du carter de frein (2).

11. Frein à disque à garniture partielle selon l'une des revendications précédentes, caractérisé en ce que le carter de frein (2) est réalisé en deux parties et est divisé selon un plan radial, décalé par rapport au disque de frein (18) en direction du dispositif de commande (13, 14), en une partie intérieure (26) et une partie extérieure (24).

12. Frein à disque à garniture partielle selon la revendication 11, caractérisé en ce qu'une bride (25) s'étendant essentiellement dans le sens radial coiffe le carter de commande (12) au milieu de celui-ci, et en ce que les parties intérieure (26) et extérieure (24) sont assemblées par vis l'une avec l'autre.

13. Frein à disque à garniture partielle selon l'une des revendications 1 à 10, caractérisé en ce que l'alésage cylindrique (14) du carter de commande (12) est fermé de façon étanche à la pression par un couvercle (70) et un joint d'étanchéité (71) disposé entre le carter (2) et le couvercle (70).

14. Frein à disque à garniture partielle selon l'une des revendications précédentes, caractérisé en ce que des nervures longitudinales (61', 62) coiffent la bride (25), voire le carter de frein (2) et s'étendent sous forme de rayons depuis le carter de commande (12), sur la bride (25), voire sur le carter de frein (2).
